# EUROPEAN PATENT SPECIFICATION

(11) **EP 4 330 556 B1**
(45) Date of publication and mention of the grant of the patent: **10.12.2025**
(21) Application number: 22724424.1
(22) Date of filing: 21.04.2022
(51) Int. Cl.: F04B 41/06, F04D 25/16, C25B 1/04

(54) **HYDROGEN COMPRESSING ASSEMBLY, HYDROGEN PRODUCTION PLANT, AND COMPRESSING METHOD**
WASSERSTOFFVERDICHTUNGSANORDNUNG, WASSERSTOFFHERSTELLUNGSANLAGE UND VERDICHTUNGSVERFAHREN
ENSEMBLE DE COMPRESSION D'HYDROGÈNE, INSTALLATION DE PRODUCTION D'HYDROGÈNE ET PROCÉDÉ DE COMPRESSION

(30) Priority: 26.04.2021 IT 202100010460
(43) Date of publication of application: 06.03.2024
(73) Proprietor: Nuovo Pignone Tecnologie - S.r.l., 50127 Florence (IT)
(72) Inventor: CANGIOLI, Francesco, 50127 Florence (FI) (IT); BERTERAME, Domenico, 50127 Florence (FI) (IT); GRIMALDI, Angelo, 50127 Florence (FI) (IT); GUGLIELMO, Alberto, 50127 Florence (FI) (IT); BASSANI, Simone, 50127 Florence (FI) (IT)
(74) Representative: Novagraaf Group
(86) International application number: PCT/EP2022/025169
(87) International publication number: WO 2022/228721

(56) References cited:
- EP-A1- 3 193 113
- WO-A1-2017/129373
- CN-U- 211 040 479

## Description

### TECHNICAL FIELD

The present disclosure concerns a hydrogen compression assembly and a plant for producing high-pressure hydrogen including the hydrogen compression assembly, which can be used in several industrial processes, such as for producing ammonia, or as a fuel source for turbines and engines, such as gas turbine of a different kind, which can be used in different technical areas.

In the following, the description will refer to the compression of hydrogen, but it is clear that the same should not be considered limited to this specific use since the compressing assembly can be used also to compress any other kind of gas.

### BACKGROUND ART

Hydrogen is produced for several industrial applications. For instance, one of the most important industrial applications of hydrogen (not the sole one) is the production of ammonia, which is a well-known chemical product usually used in a variety of industrial fields. For instance, ammonia is produced to be used as a fertilizer for fields in different types of crops. In addition, ammonia is also largely used in the crude oil refining sector, especially as a carrier for hydrogen, namely for the transport of the same.

Currently, hydrogen is mainly produced with the so-called steam-reforming process. According to this production process, methane is initially compressed. As is well known, methane is a gas that can be easily compressed, since its molecular weight is quite high (about 18). Subsequently, a step of separation of hydrogen from carbon (the so-called reforming step) takes place, obtaining hydrogen (H₂) at a pressure of 30 bars -70 bars, which is then mixed with nitrogen in order to obtain ammonia. At the pressure of 30 bars -70 bars, hydrogen can be easily transported in storage containers and/or via short and long-distance pipelines.

As is well known, hydrogen is a very small and light molecule. Therefore, transporting hydrogen through pipelines is troublesome. Generally, to achieve efficient transportation of this gas, it is necessary that it is at a pressure of the order mentioned above of 30 bars -70 bar. CN-U-211040479 discloses a refinery hydrogen compression configuration system. WO-A-2017129373 discloses a compressor.

The hydrogen production technology mentioned above, although effective, has several technical problems. One of the main problems is that it is not environment-friendly. In fact, the methane must be burnt, with the consequent production of carbon dioxide (CO₂), thus obtaining the so-called "gray hydrogen". The recent industrial interest to produce "green hydrogen", i.e., obtained by avoiding burning methane and diffusing carbon dioxide in the atmosphere, is rapidly growing in the market.

In addition, the plants for burning and treating methane have traditionally a very high footprint as well as operational costs.

Also, compressors are known for increasing the pressure of gases. In particular, there are in the field centrifugal compressors, which are suitable for compressing a medium mass flow, and allow achieving a medium pressure ratio, reciprocating compressors, which, if compared to the centrifugal compressors, are capable of compress a lower mass flow, but perform a higher pressure ratio. Reciprocating compressors have generally a larger footprint and shorter mean time between maintenance (MTBM) compared to centrifugal compressors. Finally, there are available axial compressors, capable of compressing a high mass flow, always if compared with the other solution, although perform a low-pressure ratio.

Accordingly, an improved compressing assembly and method and a plant for producing hydrogen would be welcomed in the field. More in general, it would be desirable to provide a plant capable of producing green hydrogen without burning methane or any other fuel.

### SUMMARY

The present invention is defined in the accompanying claims.

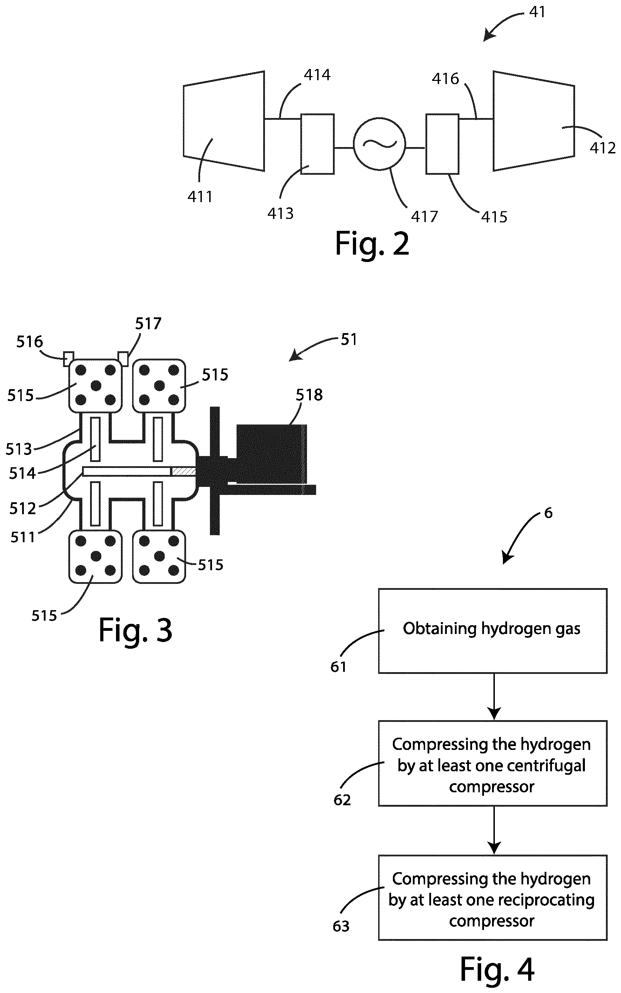

In one aspect, the subject matter disclosed herein is directed to a novel and industrially useful hydrogen compressing assembly for increasing the pressure of the produced hydrogen, and a production plant provided with the compressing assembly, for producing compressed hydrogen. The compressing assembly comprises a compressing unit equipped with barrel compressors, and a reciprocating compressor connected downstream the compressing unit, the compressing assembly being shown without the gearboxes (compare Fig. 2).

In another aspect, the subject matter disclosed herein concerns compressing unit having one or more barrel compressors, with relevant gearboxes, and a drive electric motor connected to the relevant needed gearboxes, to operate the barrel compressors.

In another aspect, disclosed herein is a compressing unit having a variable or fixed speed electric motor.

In another aspect, disclosed herein is a compressing unit having a reciprocating compressor with a plurality of piston-cylinder assemblies, operated by a reciprocal movement, equipped with suction valves, installed in each piston-cylinder assembly, through which the gas to be compressed is sucked into the piston-cylinder assembly at an input pressure, and discharge valves, installed in each piston-cylinder assembly, through which the gas compressed into the piston-cylinder assembly is discharged at an output pressure, higher than the input pressure. The reciprocating compressor is typically driven by an electric motor directly coupled with a compressor crankshaft.

A further aspect of the present disclosure is drawn to a method of compressing hydrogen gas comprising the steps of obtaining hydrogen gas, compressing the hydrogen by at least one centrifugal compressor, and then compressing the hydrogen by a reciprocating compressor.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a schematic of a plant for producing and compressing hydrogen according to a first embodiment;
Fig. 2 illustrates a barrel compressor stage for increasing the pressure of the hydrogen of the plant of Fig. 1;
Fig. 3 illustrates a reciprocating compressor for increasing the pressure of the hydrogen of the plant of Fig. 1; and
Fig. 4 illustrates a flow chart of methods of compressing hydrogen gas according to the present disclosure.

### DETAILED DESCRIPTION OF EMBODIMENTS

Hydrogen is used in many industrial applications, such as for the production of ammonia. Electrolysis is a method for producing hydrogen without burning methane, Thus, without dispersing carbon dioxide in the atmosphere when the electrical power is supplied by renewable energy systems. However, to be of any industrial use, the pressure of the hydrogen obtained by electrolysis has to be increased, because hydrogen is a very light molecule. According to one aspect, the present subject matter of the present disclosure is directed to a compressing system or assembly which combined different layouts of the compressor, namely centrifugal compressors and reciprocating compressors, to achieve a high compression rate of the gas and a reduced footprint of the plant.

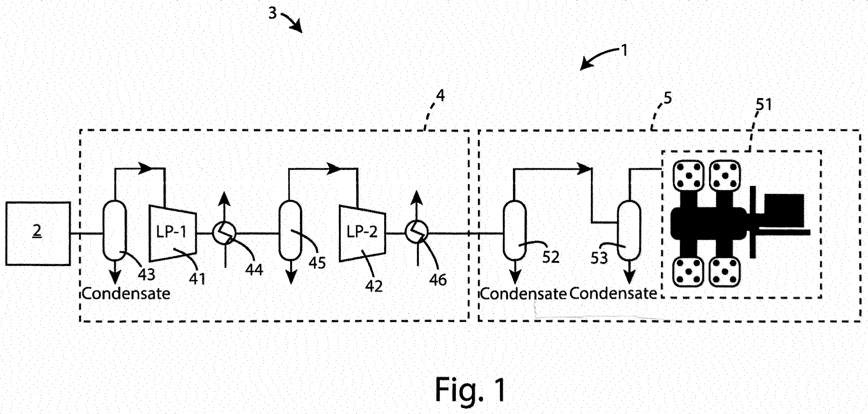

Referring now to the drawings, Fig.1 shows a schematic of a hydrogen production plant 1 according to a first embodiment.

In particular, the hydrogen production plant 1 comprises a hydrogen production stage, generally indicated with the numerical reference 2, and a compressing assembly 3, for raising the pressure of the hydrogen to a pressure of 30 bars -70 bar, as better explained below.

The hydrogen production stage 2 is based on water electrolysis. It is based on the well-known production of hydrogen by splitting water using electricity (electrolysis). This involves passing an electric current through the water to split it into hydrogen and oxygen. The electrolysis offers virtually no pollution or toxic byproducts if the electric current is generated using renewable energy.

The hydrogen produced by the hydrogen production stage 2 is at ambient pressure, so it is challenging to transport in the state in which it is produced. Such hydrogen must be pressurized and stored in special containers suitable for transport or pressurized for transport through a pipeline to a pre-determined destination (storage container, hydrogen turbine, refueling stations, etc.). Therefore, downstream the hydrogen production stage 2 the compressing assembly 3 is connected, to increase the pressure of the produced hydrogen, for it to reach the above-mentioned pressure of 30 bar - 70 bar.

More specifically, the compressing assembly 3 is, in the embodiment considered, ideally divided into two substages, a lower pressure substage 4, to increase, in the embodiment at issue, the hydrogen pressure from ambient pressure to around 5 bars -7 bars, and a final pressure substage 5, to raise the hydrogen pressure up to around 30 bars -70 bars or more, according to the design requirements of the plant.

More specifically, still referring to the schematic of Fig. 1, the lower pressure substage 4 comprises (schematically) a compressing unit 41, having in its turn two barrel compressors 411 and 412 respectively, arranged in series.

More specifically, still referring to the schematic of Fig. 1, the lower pressure substage 4 comprises (schematically) a first condenser 43, connected to the hydrogen production stage 2, for condensing part of the wet component of the hydrogen coming from the electrolysis of the hydrogen production stage 2.

The lower pressure substage 4 also comprises a first compressing unit 41, connected downstream to the first condenser 43. Referring to Fig. 2, the layout of the first compressing unit 41 of the lower pressure substage 4 is illustrated. The first compressing unit 41 comprises a first barrel compressor 411, a first gearbox 413, connected to the drive shaft 414 of the first barrel compressor 411, a second barrel compressor 412, a second gearbox 415, connected to the drive shaft 416 of the second barrel compressor 412, and an electric motor 417, operatively connected to the first 413 and the second 415 gearboxes, to operate the barrel compressors 411 and 412. The gear ratio of each gearbox 413 and 416 is set according to the compression performances required.

Also, any kind of gearbox can be implemented, such as the epicyclic or planetary gearboxes, worm gearboxes, helical gearboxes, bevel gearboxes.

Suitable gearbox rations can be determined depending on the compression ratio desired. Also, the overall compression ratio of the compressing assembly 3 is distributed through each compressing stage according to specific design necessities.

The drive electric motor 417 is a variable speed electric motor, so as to better adapt the compression ratio of the lower pressure substage 4, depending on the inlet gas flow rate.

In other embodiments, the drive electric motor 417 can have a fixed speed, thus saving the overall costs of the system.

Also, the first barrel compressor 411 may be equipped with Inlet Guide Vanes - IGVs (not shown in the figure), to adjust the airflow and pressure that enters the centrifugal compressor.

The lower pressure substage 4 comprises also a first heat exchanger 44, to lower the temperature by intercooling of the hydrogen and possibly condense the wet of the same, a second condenser 45, connected downstream the first heat exchanger 44, and a second compressing unit 42, connected to the second condenser 45. The second compressing unit 42 in the present embodiment is equal to the first compressing unit 41, but for possible compression ratio.

Finally, the lower pressure substage 4 comprises a second heat exchanger 46, connected downstream to the second compressing unit 42.

The final pressure substage 5 comprises a third 52 and a fourth 53 condenser, series connected to the second heat exchanger 46 of the lower pressure substage 4, to take out the condensation from the gas mixture.

Also, the final pressure substage 5 comprises a reciprocating compressor 51, to rise, in the present embodiment, the pressure of the hydrogen till 30-70 bars, as well as to cool it.

The reciprocating compressor 51 is illustrated in Fig. 4. The reciprocating compressor 51 comprises a frame 511, in which a crankshaft 512 is housed (schematically shown in the figure), and crosshead guides 513, which, in the case at issue are four. In each crosshead guides 513 a piston rod 514 is housed, connected to the crankshaft 512, so as to be actuated in a reciprocating movement.

In other embodiments, depending on the necessities and performances to be achieved, a different number of crossheads guides 512 (and piston rods 514) can be foreseen.

Also, the reciprocating compressor 51 comprises a piston-cylinder assembly 515 for each crosshead guide 512, wherein the piston of the piston-cylinder assembly 515 is actuated by the relevant piston rod 514, to receive the reciprocating movement from the crankshaft 512. The reciprocating compressor 51 comprises, installed in each piston-cylinder assembly 515, suction valves 516, through which the gas to be compressed, namely, in the embodiment at issue, the hydrogen, is sucked into the relevant piston-cylinder assembly 515 at an input pressure, and discharge valves 517, through which the gas compressed into the piston-cylinder assembly 515 is discharged at an output pressure, higher than the input pressure.

Finally, the reciprocating compressor 51 comprises an electric motor 518, connected to the crankshaft 512, to operate the same, allowing the actuation of the piston-cylinders 515 and the compression of the hydrogen.

The green hydrogen production plant 1 operates as follows.

When the hydrogen production stage 2 generates the hydrogen electrolysis, the gas is at ambient temperature and wet. The hydrogen then enters into the first condenser 43 of the lower pressure substage 4, to take put condensation, to be then compressed by the first compressing unit 41, by means of the first barrel compressor 411 and the second barrel compressor 412, properly driven by the electric motor 417 and the gearboxes 413 and 415.

Then, the compressed gas is cooled down by the first heat exchanger 44 and processed by the condenser 45, before being further compressed by the second compressing unit 42, which, as said, is structurally and functionally similar to the first compressing unit 41. Then, the further compressed gas passes through the second heat exchanger 46, before reaching the third and the fourth condensers 52 and 53 of the final pressure substage 5, to be further compressed by the reciprocating compressor 51, driven by the electric motor 518, which, as said above, drives the crankshaft 512, to operate the piston-cylinder assemblies 515, to compress the hydrogen trough the suction valves 516 and the discharge valves 517. The hydrogen pressure is then increased up to 30 bars- 70 bars.

At this point, the high-pressure hydrogen is ready to be transported and possibly to produce ammonia or for any other use.

Referring to Fig. 4, a method 6 of compressing hydrogen gas, or any other gas, is shown, which is carried out by the hydrogen production plant 1. The method 6 comprises the steps of obtaining 61 hydrogen gas, which, in order to produce high-pressure green hydrogen, it is carried out by electrolysis, by the hydrogen production stage 2.

Then the method 6 comprises the step of compressing 62 hydrogen, or any other gas, by at least one centrifugal compressor, such as compressing units 41, 42.

Finally, the method 6 of producing hydrogen gas further comprises the step of compressing 63 the hydrogen by at least one reciprocating compressor 61.

An advantage of the solution disclose is that it is possible to increase the availability and reliability of the hydrogen production plants.

Another advantage is that the hydrogen production plant realized with this layout has a reduced footprint if compared with the hydrogen production plants of the prior art.

An additional advantage of the compression layout according to the present disclosure is that the application of the integrally geared centrifugal compressor in the final pressure substage fits well with this train because of the low volumetric flow at the end of the compression process.

A further advantage of the present disclosure is that it provides a compact solution for H₂ compression with respect to the standard solution with a reciprocating compressor. Moreover, the mean time between maintenance (MTBM) is drastically increased, so as to achieved reduced operating expenditures (OPEX).

While aspects of the invention have been described in terms of various specific embodiments, it will be apparent to those of ordinary skill in the art that many modifications, changes, and omissions are possible without departing from the scope of the claims. In addition, unless specified otherwise herein, the order or sequence of any process or method steps may be varied or re-sequenced according to reciprocating embodiments.

Reference has been made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope of the disclosure. Reference throughout the specification to "one embodiment" or "an embodiment" or "some embodiments" means that the particular feature, structure, or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures, or characteristics may be combined in any suitable manner in one or more embodiments.

When elements of various embodiments are introduced, the articles "a", "an", "the", and "said" are intended to mean that there are one or more of the elements. The terms "comprising", "including", and "having" are intended to be inclusive and mean that there may be additional elements other than the listed elements.

## Claims

1. A gas compressing assembly (3), for increasing the pressure of a gas, such as the hydrogen and the like, comprising:
at least one compressing unit (41, 42) having at least one barrel compressor (411, 412); and
at least one reciprocating compressor (51), connected downstream the at least one compressing unit (41, 42), wherein the pressure stage comprises:
a lower pressure substage (4) having the at least one compressing unit (41, 42); and
a final pressure substage (5) comprising the at least one reciprocating compressor (51) **characterized in that** the compressing unit (41) comprises:
a first barrel compressor (411);
a drive shaft (414) connected to the first barrel compressor (411);
a first gearbox (413), connected to the drive shaft (414) of the first barrel compressor (411);
a second barrel compressor (412),
a drive shaft (416) connected to the second barrel compressor (412);
a second gearbox (415), connected to the drive shaft (416) of the second barrel compressor (412); and
an electric motor (417), operatively connected to the first and the second gearboxes (413, 415), to operate the first and the second barrel compressors (411, 412);
the first gearbox (413) or the second gearbox (415) comprising an epicyclic or planetary gearbox, a worm gearbox, a helical gearbox or a bevel gearbox.

2. The gas compressing assembly of claim 1, wherein the electric motor (417) of the compressing unit is a variable or fixed speed electric motor.

3. The gas compressing assembly according of claim 2, wherein the reciprocating compressor (51) comprises:
a frame (511);
a crankshaft (512) housed within the frame (511);
a plurality of crosshead guides (513);
a plurality of piston rods (514), each one housed in a crosshead guide (513), wherein each piston rod (514) is connected to the crankshaft (512), so as to be actuated in a reciprocating movement;
a plurality of piston-cylinder assemblies (515), each one connected to a piston rod (514), wherein each of the piston-cylinder assemblies (515) is actuated by the relevant piston rod (514), to receive the reciprocating movement from the crankshaft (512);
suction valves (516), installed in each piston-cylinder assembly (515), through which the gas to be compressed is sucked into the piston-cylinder assembly (515) at an input pressure;
and discharge valves (517), installed in each piston-cylinder assembly (515), through which the gas compressed into the piston-cylinder assembly (515) is discharged at an output pressure, higher than the input pressure; and
an electric motor (518), connected to the crankshaft.

4. The gas compressing assembly of claim 1, wherein the lower pressure substage (4) comprises:
a first and a second compressing unit (41, 42);
a first condenser (43), connected to the first compressing unit (41);
a first heat exchanger (44), to lower the temperature by intercooling, and, eventually, condense the wet part of the hydrogen;
a second condenser (45), connected downstream the first heat exchanger (44), interposed between the first heat exchanger (44) and the second compressing unit (42); and
a second heat exchanger (46) connected downstream the second compressing unit (42).

5. The gas compressing assembly of claim 1, wherein the final pressure substage (5) comprises a third and a fourth condenser (52, 53), series-connected between the second heat exchanger (46) of the lower pressure substage (4) and the reciprocating compressor (51), wherein the third and the fourth condensers (52, 53) are capable of reducing the wet of the hydrogen gas.

6. A hydrogen production plant (1), comprising:
a hydrogen production stage (2), configured to produce hydrogen; and
the gas compressing assembly (3) of any one of the preceding claims, connected to the hydrogen production stage (2), for increasing the pressure of the hydrogen produced by the hydrogen production stage (2).

7. The hydrogen production plant of claim 6, wherein the hydrogen production stage (2) is based on water electrolysis.

8. A method of compressing hydrogen gas comprising the steps of:
obtaining (61) hydrogen gas; and
compressing (62, 63) the hydrogen by the gas compressing assembly of claim 1.

9. The method of claim 8, wherein the step of obtaining hydrogen is carried out by electrolysis.

## Patentansprüche

1. Gasverdichtungsanordnung (3) zum Erhöhen des Drucks eines Gases, wie Wasserstoff und dergleichen, umfassend:
mindestens eine Verdichtungseinheit (41, 42) mit mindestens einem Trommelverdichter (411, 412); und
mindestens einen Kolbenverdichter (51), der stromabwärts der mindestens einen Verdichtungseinheit (41, 42) angeschlossen ist, wobei die Druckstufe umfasst:
eine Niederdruckunterstufe (4) mit der mindestens einen Verdichtungseinheit (41, 42); und
eine Enddruckunterstufe (5), umfassend den mindestens einen Kolbenverdichter (51), **dadurch gekennzeichnet, dass** die Verdichtungseinheit (41) umfasst:
einen ersten Trommelverdichter (411);
eine Antriebswelle (414), die mit dem ersten Trommelverdichter (411) verbunden ist;
ein erstes Getriebe (413), das mit der Antriebswelle (414) des ersten Trommelverdichters (411) verbunden ist;
einen zweiten Trommelverdichter (412),
eine Antriebswelle (416), die mit dem zweiten Trommelverdichter (412) verbunden ist;
ein zweites Getriebe (415), das mit der Antriebswelle (416) des zweiten Trommelverdichters (412) verbunden ist; und
einen Elektromotor (417), der betriebsmäßig mit dem ersten und dem zweiten Getriebe (413, 415) verbunden ist, um den ersten und den zweiten Trommelverdichter (411, 412) zu betreiben;
wobei das erste Getriebe (413) oder das zweite Getriebe (415) ein Umlauf- oder Planetengetriebe, ein Schneckengetriebe, ein Stirnradgetriebe oder ein Kegelradgetriebe umfasst.

2. Gasverdichtungsanordnung nach Anspruch 1, wobei der Elektromotor (417) der Verdichtungseinheit ein Elektromotor mit variabler oder fester Drehzahl ist.

3. Gasverdichtungsanordnung nach Anspruch 2, wobei der Kolbenverdichter (51) umfasst:
einen Rahmen (511);
eine Kurbelwelle (512), die in dem Rahmen (511) untergebracht ist;
eine Vielzahl von Kreuzkopfführungen (513);
eine Vielzahl von Kolbenstangen (514), die jeweils in einer Kreuzkopfführung (513) untergebracht sind, wobei jede Kolbenstange (514) mit der Kurbelwelle (512) verbunden ist, um in einer Hin- und Herbewegung betätigt zu werden;
eine Vielzahl von Kolben-Zylinder-Anordnungen (515), die jeweils mit einer Kolbenstange (514) verbunden sind, wobei jede der Kolben-Zylinder-Anordnungen (515) durch die entsprechende Kolbenstange (514) betätigt wird, um die Hin- und Herbewegung von der Kurbelwelle (512) aufzunehmen;
Saugventile (516), die in jeder Kolben-Zylinder-Anordnung (515) installiert sind und durch die das zu komprimierende Gas mit einem Eingangsdruck in die Kolben-Zylinder-Anordnung (515) gesaugt wird;
und Auslassventile (517), die in jeder Kolben-Zylinder-Anordnung (515) installiert sind, durch die das in die Kolben-Zylinder-Anordnung (515) komprimierte Gas mit einem Ausgangsdruck abgelassen wird, der höher ist als der Eingangsdruck; und
einen Elektromotor (518), der mit der Kurbelwelle verbunden ist.

4. Gasverdichtungsanordnung nach Anspruch 1, wobei die NiederdruckUnterstufe (4) umfasst:
eine erste und eine zweite Verdichtungseinheit (41, 42);
einen ersten Kondensator (43), der mit der ersten Verdichtungseinheit (41) verbunden ist;
einen ersten Wärmetauscher (44), um die Temperatur durch Zwischenkühlung zu senken und schließlich den feuchten Teil des Wasserstoffs zu kondensieren;
einen zweiten Kondensator (45), der stromabwärts des ersten Wärmetauschers (44) angeschlossen ist und zwischen dem ersten Wärmetauscher (44) und der zweiten Verdichtungseinheit (42) angeordnet ist; und
einen zweiten Wärmetauscher (46), der stromabwärts der zweiten Verdichtungseinheit (42) angeschlossen ist.

5. Gasverdichtungsanordnung nach Anspruch 1, wobei die Enddruckunterstufe (5) einen dritten und einen vierten Kondensator (52, 53) umfasst, die in Reihe zwischen dem zweiten Wärmetauscher (46) der Niederdruckunterstufe (4) und dem Kolbenverdichter (51) geschaltet sind, wobei der dritte und der vierte Kondensator (52, 53) in der Lage sind, den Feuchtigkeitsgehalt des Wasserstoffgases zu verringern.

6. Wasserstoffherstellungsanlage (1), umfassend:
eine Wasserstoffherstellungsstufe (2), die zum Herstellen von Wasserstoff konfiguriert ist; und
die Gasverdichtungsanordnung (3) nach einem der vorhergehenden Ansprüche, die mit der Wasserstoffherstellungsstufe (2) verbunden ist, um den Druck des von der Wasserstoffherstellungsstufe (2) hergestellten Wasserstoffs zu erhöhen.

7. Wasserstoffherstellungsanlage nach Anspruch 6, wobei die Wasserstoffherstellungsstufe (2) auf Wasserelektrolyse basiert.

8. Verfahren zum Verdichten von Wasserstoffgas, das die folgenden Schritte umfasst:
Gewinnen (61) von Wasserstoffgas; und
Verdichten (62, 63) des Wasserstoffs durch die Gasverdichtungsanordnung nach Anspruch 1.

9. Verfahren nach Anspruch 8, wobei der Schritt der Wasserstoffgewinnung durch Elektrolyse erfolgt.

## Revendications

1. Ensemble de compression de gaz (3), pour augmenter la pression d'un gaz, tel que l'hydrogène et autres, comprenant :
au moins une unité de compression (41, 42) ayant au moins un compresseur à barillet (411, 412) ; et
au moins un compresseur alternatif (51), relié en aval de l'au moins une unité de compression (41, 42), dans lequel l'étage de pression comprend :
un sous-étage à basse pression (4) ayant l'au moins une unité de compression (41, 42) ; et
un sous-étage de pression finale (5) comprenant l'au moins un compresseur alternatif (51) **caractérisé en ce que** l'unité de compression (41) comprend :
un premier compresseur à barillet (411) ;
un arbre de transmission (414) relié au premier compresseur à barillet (411) ;
un premier réducteur (413), relié à l'arbre de transmission (414) du premier compresseur à barillet (411) ;
un second compresseur à barillet (412),
un arbre de transmission (416) relié au second compresseur à barillet (412) ;
un second réducteur (415), relié à l'arbre de transmission (416) du second compresseur à barillet (412) ; et
un moteur électrique (417), relié de manière opérationnelle aux premier et second réducteurs (413, 415), pour faire fonctionner les premier et les second compresseurs à barillet (411, 412) ;
le premier réducteur (413) ou le second réducteur (415) comprenant un réducteur épicycloïdal ou planétaire de réducteur, un réducteur à vis sans fin, un réducteur hélicoïdal ou un réducteur à couple conique.

2. Ensemble de compression de gaz selon la revendication 1, dans lequel le moteur électrique (417) de l'unité de compression est un moteur électrique à vitesse variable ou fixe.

3. Ensemble de compression de gaz selon la revendication 2, dans lequel le compresseur alternatif (51) comprend :
un cadre (511) ;
un vilebrequin (512) logé dans le cadre (511) ;
une pluralité de guides de tête croisée (513) ;
une pluralité de tiges de piston (514), chacune logée dans un guide de tête croisée (513), dans lequel chaque tige de piston (514) est reliée au vilebrequin (512), de manière à être actionnée dans un mouvement alternatif ;
une pluralité d'ensembles piston-cylindre (515), chacun relié à une tige de piston (514), dans lesquels chaque ensemble piston-cylindre (515) est actionné par la tige de piston correspondante (514), pour recevoir le mouvement alternatif à partir du vilebrequin (512) ;
des soupapes d'aspiration (516), installées dans chaque ensemble piston-cylindre (515), à travers lesquelles le gaz à comprimer est aspiré dans l'ensemble piston-cylindre (515) à une pression d'entrée ;
et des soupapes de décharge (517), installées dans chaque ensemble piston-cylindre (515), à travers lesquelles le gaz comprimé dans l'ensemble piston-cylindre (515) est déchargé à une pression de sortie supérieure à la pression d'entrée ; et
un moteur électrique (518), relié au vilebrequin.

4. Ensemble de compression de gaz selon la revendication 1, dans lequel le sous-étage de basse pression (4) comprend :
une première et une seconde unité de compression (41, 42) ;
un premier condenseur (43), relié à la première unité de compression (41) ;
un premier échangeur de chaleur (44), pour réduire la température par refroidissement intermédiaire et, éventuellement, condenser la partie humide de l'hydrogène ;
un deuxième condenseur (45), relié en aval du premier échangeur de chaleur (44), interposé entre le premier échangeur de chaleur (44) et la seconde unité de compression (42) ; et
un second échangeur de chaleur (46) relié en aval de la seconde unité de compression (42).

5. Ensemble de compression de gaz selon la revendication 1, dans lequel le sous-étage de pression finale (5) comprend un troisième et un quatrième condenseur (52, 53), reliés en série entre le second échangeur de chaleur (46) du sous-étage de pression inférieure (4) et le compresseur alternatif (51), dans lequel les troisième et quatrième condenseurs (52, 53) sont capables de réduire l'humidité de l'hydrogène gazeux.

6. Installation de production d'hydrogène (1), comprenant :
un étage de production d'hydrogène (2), conçu pour produire de l'hydrogène ; et
l'ensemble de compression de gaz (3) selon l'une quelconque des revendications précédentes, relié à l'étage de production d'hydrogène (2), pour augmenter la pression de l'hydrogène produit par l'étage de production d'hydrogène (2).

7. Installation de production d'hydrogène selon la revendication 6, dans laquelle l'étage de production d'hydrogène (2) est basé sur l'électrolyse de l'eau.

8. Procédé de compression de l'hydrogène gazeux comprenant les étapes consistant à :
obtenir (61) un hydrogène gazeux ; et
compresser (62, 63) l'hydrogène par l'ensemble de compression de gaz selon la revendication 1.

9. Procédé selon la revendication 8, dans lequel l'étape d'obtention de l'hydrogène est réalisée par électrolyse.
